# EUROPÄISCHE PATENTSCHRIFT

(11) **EP 1 508 395 B1**
(45) Veröffentlichungstag und Bekanntmachung des Hinweises auf die Patenterteilung: **09.09.2009**
(21) Anmeldenummer: 04090295.9
(22) Anmeldetag: 23.07.2004
(51) Int. Cl.: B23H 9/00, B23H 3/00, B23H 3/04

(54) **Vorrichtung zum Elysiersenken**
Electrochemical machining device
Machine pour usinage électrochimique

(30) Priorität: 19.08.2003 DE 10339046
(43) Veröffentlichungstag der Anmeldung: 23.02.2005
(73) Patentinhaber: Rolls-Royce Deutschland Ltd & Co KG, 15827 Dahlewitz (DE)
(72) Erfinder: Schreiber, Karl, 15806 Mellensee (DE)
(74) Vertreter: Wablat, Wolfgang

(56) Entgegenhaltungen:
- DE-A1- 2 903 873
- FR-A- 2 778 674
- US-A- 5 655 883
- US-A- 5 692 881
- PATENT ABSTRACTS OF JAPAN Bd. 004, Nr. 143 (M-035), 8. Oktober 1980 (1980-10-08) & JP 55 096231 A (INST TECH PRECISION ENG), 22. Juli 1980 (1980-07-22)

## Beschreibung

Die Erfindung betrifft eine Vorrichtung zum Elysiersenken für die Herstellung langgestreckter, gekrümmter Hohlräume in einem als Anode dienenden metallischen Bauteil mit einer in einem Elektrolyten eine Vortriebsbewegung in Z-Richtung ausführenden, an einem angetriebenen Führungsgestänge gehaltenen Arbeitselektrode, insbesondere zur Herstellung hohler Fanschaufeln für Flugtriebwerke nach dem Oberbegriff des Anspruchs 1. Eine derartige Vorrichtung ist aus der DE 29 03873 bekannt.

Formgebungsverfahren und entsprechende Vorrichtungen, die auf dem Prinzip des elektro-chemischen Abtragens des Werkstoffs basieren, sind hinreichend bekannt. Bei einem beispielsweise aus der DE 29 03 873 bekannten Verfahren zur elektrochemischen Bearbeitung strömt in dem zwischen den beiden Elektroden, nämlich dem Werkzeug und dem Werkstück, gebildeten Bearbeitungsspalt eine Elektrolytlösung, und nach dem Prinzip der elektro-chemischen Zelle wird von dem Werkstück Material abgetragen, das als Metallhydroxid in der gesättigten, kontinuierlich abströmenden Elektrolytlösung abtransportiert wird. Bei allmählichem Vorschub einer der Elektroden wird in dem Werkstück beispielsweise ein Kanal mit einem entsprechend der Form des Werkzeugs einschließlich eines Arbeitsspaltes ausgebildeten Querschnitt erzeugt. Der Anwendung des elektrochemischen Materialabtrags in Form des Elysiersenkens zur Herstellung langgestreckter Hohlräume sind - zum Beispiel bei der Fertigung von aus massivem Material bestehenden Hohlschaufeln für Flugtriebwerke - insofern Grenzen gesetzt, als das als Arbeitselektrode fungierende Werkzeug einem entsprechend den jeweiligen Bauteilkonturen komplizierten - gekrümmten und verdrehten - Kanalverlauf nicht folgen kann und der erzeugte Kanalquerschnitt in Form und Größe auch nicht an eine über die Länge des Kanals veränderliche Wandstärke des Werkstücks angepasst werden kann, um einen variablen Materialabtrag zu erzielen.

Bei den Fanschaufeln von Flugtriebwerken kommt es beispielsweise darauf an, zur Gewichtsreduzierung im Innern der Schaufel Hohlräume in Form von Kanälen auszubilden, die der komplizierten, gekrümmten und verdrehten Schaufelform (Twist) und hinsichtlich der Größe des Kanalquerschnitts der unterschiedlichen Schaufelstärke folgen können, um über eine große Schaufellänge möglichst viel Material abzutragen und aus einer vorgefertigten Schaufel aus massivem Material, wie zum Beispiel Titan, eine leichte, aber dennoch stabile Hohlschaufel herstellen zu können. Die Schaufeln für den Fan einer Flugturbine müssen einerseits Festigkeitseigenschaften aufweisen, die den durch Eigenschwingungen, Schwingungsamplitude und Zentrifugalkräfte sowie den durch Vogelschlag bedingten Kräften standhalten, andererseits aber den Anforderungen an ein geringes Gewicht und gegenüber dem Stand der Technik verringerte Herstellungskosten gerecht werden.

Die bekannten Verfahren zur Herstellung hohler Fanschaufeln aus Titan basieren auf kostenaufwendigen Umform- und Fügeprozessen zur Bereitstellung sogenannter gebauter Strukturen, beispielsweise entsprechend den US-Patentschriften 56 92 881 oder 60 33 186. Andere bekannte Schaufelkonstruktionen sind zur Gewichtsreduzierung aus einer Kombination von Titan und einem Kohlenstofffaserverbundmaterial gebildet, wobei sich das Faserverbundmaterial lediglich auf der Druckseite der Schaufeln befindet (US 5 655 883) oder ein Faserverbundkern mit einer metallischen Deckschicht versehen ist (US 5 876 651, DE 196 27 680). Auch die in dieser Weise ausgebildeten Fanschaufeln sind wegen des hohen Fertigungsaufwandes und der damit verbundenen hohen Kosten nachteilig.

Die bekannten, in Leichtbauweise gefertigten Schaufelkonstruktionen sind zudem noch weniger für Fanschaufeln kleinerer und mittlerer Flugtriebwerke geeignet, da gemessen an den Herstellungskosten nur vergleichsweise geringe Gewichtseinsparungen erzielt werden können und auch die Vogelschlagfestigkeit höchsten Anforderungen nicht gerecht wird.

Darüber hinaus wurde bereits vorgeschlagen, lediglich in der Schaufelspitze einer massiv ausgebildeten Titanschaufel mit Hilfe bekannter elektro-erosiver Verfahren und Vorrichtungen einen oder mehrere Hohlräume zu schaffen, um das Gewicht der Schaufel zumindest im Spitzenbereich zu verringern und bereits dadurch die am Schaufelfuß wirkenden Zentrifugalkräfte zu reduzieren. Die dabei erzielte Verminderung des Schaufelgewichts ist jedoch vergleichsweise gering.

Der Erfindung liegt die Aufgabe zugrunde, eine Vorrichtung zum Elysiersenken anzugeben, die in einem massiven Bauteil, insbesondere in massiv vorgefertigten Fanschaufeln für ein Flugtriebwerk, die Herstellung langgestreckter, in der Achsausrichtung variabler Hohlräume zur maximalen Gewichtsreduzierung ermöglicht.

Erfindungsgemäß wird die Aufgabe mit einer gemäß den Merkmalen des Anspruchs 1 ausgebildeten Vorrichtung gelöst. Aus den Unteransprüchen ergeben sich weitere Merkmale und vorteilhafte Weiterbildungen der Erfindung.

Ein erstes wichtiges Merkmal der Erfindung besteht darin, dass die zum Abtragen des Materials in dem Elektrolytstrom vorgesehene Arbeitselektrode an einem biegsamen, torsionssteifen Führungsgestänge angebracht ist, das einem von der Senkrechten abweichenden - gebogenen Verlauf des auszubildenden Hohlraums folgen kann. An das Führungsgestänge ist ein Vorschubantrieb und gegebenenfalls ein Drehantrieb angeschlossen.

Gemäß einem weiteren wichtigen Erfindungsmerkmal ist zwischen der Arbeitselektrode und dem mit einem Antrieb verbundenen Führungsgestänge ein Führungskörper mit einer etwa der Querschnittsform des Hohlraums entsprechenden, jedoch kleineren Querschnittsfläche angeordnet, der an den Seitenwänden mittels eines Antriebs verstellbare, an der Innenwand des bereits eingesenkten Hohlraumabschnitts sich abstützende Führungsstempel aufweist. Durch Verstellen der Führungsstempel kann der Führungskörper in X- und oder Y-Richtung verstellt oder auch gedreht werden, wobei sich die verschiedenen Bewegungsrichtungen überlagern und die Arbeitselektrode zum Beispiel bei einer Fanschaufel in einer gewünschten gebogenen Richtung vorgetrieben werden kann und beispielsweise auch dem Twist der Fanschaufel folgen kann.

Gemäß einem dritten wichtigen Erfindungsmerkmal erfolgt die Verstellung der Führungsstempel in X-Y-Richtung oder deren Verdrehen in Abhängigkeit von der in dem jeweiligen Führungsbereich des Führungskörpers während des Vorschubs ermittelten Wandstärke des einen Hohlkörper bildenden Bauteils. Zu diesem Zweck ist erfindungsgemäß eine parallel zum Führungskörper mitgeführte Messeinrichtung vorgesehen, die steuerungstechnisch mit den Antriebsmitteln für die Führungsstempel verknüpft ist. Die gesamte Steuerung wird vorzugsweise von einer Software kontrolliert. Dadurch kann der langgestreckte Hohlraum parallel zu einer gekrümmten Außenwand des betreffenden Bauteils erzeugt werden. Grundsätzlich kann aber der Verlauf des langgestreckten Hohlraums über eine vorgegebene veränderliche Wandstärke zur Steuerung des Führungskörpers bestimmt werden.

In vorteilhafter Weiterbildung der Erfindung kann die Verstellung der Führungsstempel mit Hilfe mechanischer oder hydraulischer Mittel erfolgen.

In weiterer Ausbildung der Erfindung ist die Messeinrichtung zur Wandstärkenbestimmung über ein Drehgelenk mit dem drehbaren, torsionssteifen Führungsgestänge verbunden und an der Außenseite des Bauteils parallel zum Führungskörper geführt.

Die Wandstärkenmessung kann beispielsweise magnetisch erfolgen, wobei an dem Führungskörper ein Neodym-Magnet angebracht ist und an einem mit dem biegeweichen Führungsgestänge drehbeweglich verbundenen Gestänge zwei Magnetometersonden angebracht sind.

Nach einem weiteren Merkmal der Erfindung ist die Arbeitselektrode mehrteilig und daher in der Form und Größe verstellbar ausgebildet, so dass im Verlauf eines Bearbeitungsvorgangs Hohlräume mit veränderlichem Querschnitt erzeugt werden können.

Mit der erfindungsgemäßen Vorrichtung können somit durch elektro-chemische Bearbeitung (Elysiersenken) entsprechend der Ausbildung des Bauteils langgestreckte Hohlräume mit einem von der Vertikalen abweichenden - gekrümmten - Achsverlauf und mit in Größe und Form veränderlichem Querschnitt hergestellt werden. Vorzugsweise können aus massivem Material gefertigte gewölbte Fanschaufeln für Flugtriebwerke zur wirksamen Gewichtsreduzierung mit der Schaufelkrümmung in weiten Bereichen folgenden Hohlräumen ausgebildet werden.

Ein Ausführungsbeispiel der Erfindung wird anhand der Zeichnung näher erläutert. Es zeigen:
- Fig. 1: eine Schnittansicht einer Vorrichtung zur elektro-erosiven Herstellung eines gekrümmten langgestreckten Hohlraums in einer Fanschaufel eines Flugtriebwerkes;
- Fig. 2: eine Schnittansicht der Vorrichtung nach Fig. 1 innerhalb des in dem Bauteil auszubildenden Hohlraums;
- Fig. 3: eine perspektivische, vergrößerte Darstellung eines entsprechend dem gewünschten gekrümmten Verlauf des Hohlraums über die verbleibende Wandstärke und eine Bahnführung an der Außenseite des betreffenden Bauteils steuerbaren, dreidimensional bewegbaren und drehbaren Erodierwerkzeugs;
- Fig. 4: eine detaillierte Ansicht eines zur Steuerung hydraulisch betätigten Führungsstempels des Erodierwerkzeugs; und
- Fig. 5: eine detaillierte Darstellung einer weiteren Ausführungsform eines in diesem Fall mechanisch angetriebenen Führungsstempels.

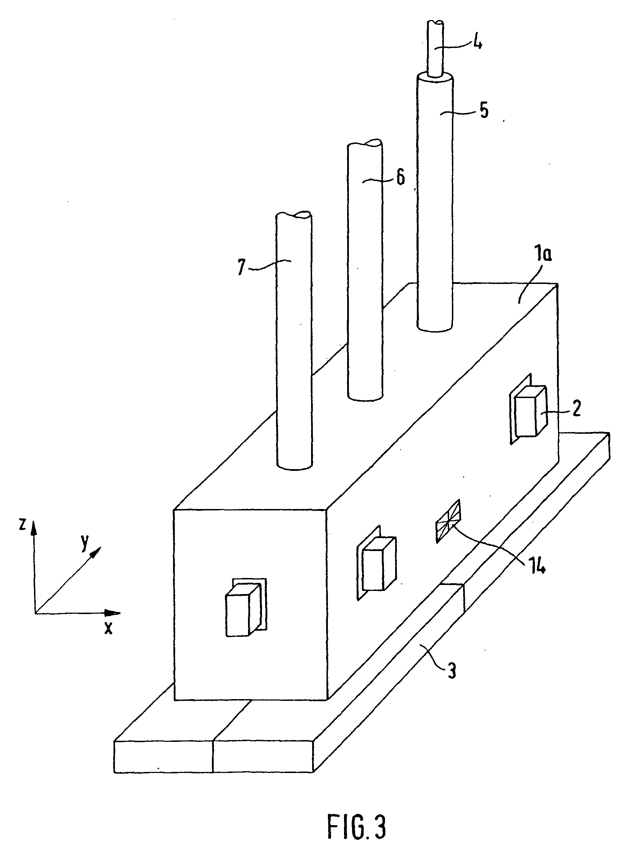

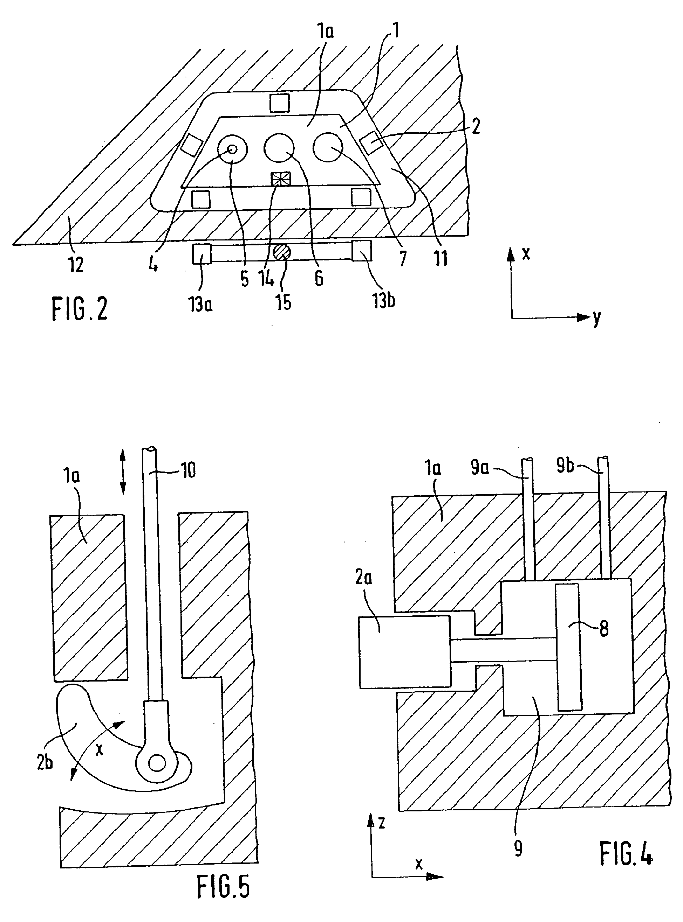

Das Erodierwerkzeug 1 umfasst einen aus nicht magnetischem Material bestehenden Führungskörper 1a, der an der Materialabtragsseite eine Elektrode (Kathode), im Ausführungsbeispiel eine mehrteilige, in der Größe verstellbare Arbeitselektrode 3 aufweist, die an ein an der gegenüberliegenden Seite angebrachtes Stromzuführungskabel 4 angeschlossen ist. Die Arbeitselektrode 3 ist gemäß Fig. 2 trapezförmig und gemäß Fig. 3 rechteckig, aber mehrteilig, ausgebildet. Mit der mehrteiligen Arbeitselektrode kann der Querschnitt des in dem Bauteil auszubildenden Hohlraums im Verlauf des elektrochemischen Formgebungsprozesses in Form und Größe verändert werden. Das Stromzuführungskabel 4 ist in ein mit dem Führungskörper 1a des Erodierwerkzeugs 1 fest verbundenes Führungsgestänge 5 integriert. Das Führungsgestänge 5 besteht aus einem biegeweichen, aber torsionssteifen Material. Über das Führungsgestänge 5 wird von einem nicht dargestellten Antrieb eine Vorschubbewegung in der Z-Achse gemäß dem Pfeil A - sowie gegebenenfalls eine Drehbewegung gemäß dem Pfeil B - auf den Führungskörper 1a des Erodierwerkzeugs 1 übertragen. Außerdem kann der Führungskörper 1a als solcher auch in der X-Achse und der Y-Achse bewegt und gedreht werden. Zur Erzeugung dieser Eigenbewegung weist der Führungskörper 1a an den Seitenwänden bewegliche, mit einem Antrieb verbundene Führungsstempel 2 auf, die unabhängig voneinander angetrieben werden können. Die Figuren 4 und 5 zeigen jeweils in detaillierter Darstellung einen für einen mikrohydraulischen Antrieb ausgebildeten Führungsstempel 2a bzw. einen für einen mechanischen Antrieb ausgebildeten Führungsstempel 2b. Gemäß der hydraulischen Antriebsvariante nach Fig. 4 ist der Führungsstempel 2a mit einem Kolben 8 verbunden, der sich in einem Druckzylinder 9 mit an diesen angeschlossenen Druckschläuchen 9a und 9b befindet. Gemäß der in Fig. 5 wiedergegebenen mechanischen Antriebsvariante ist der Führungsstempel 2b als Drehhebel ausgebildet, der mit Hilfe eines Antriebsgestänges 10 und eines mit diesem verbundenen Antriebs (nicht dargestellt) verschwenkbar ist. Die Druckschläuche 9a, 9b bzw. das Antriebsgestänge 10 befinden sich in einem vom Führungskörper 1a ausgehenden, nach außen geführten biegsamen Hüllrohr 6. Außerdem ist an das Erodierwerkzeug 1 eine Schlauchleitung 7 für die kontinuierliche Elektrolytzufuhr zur Arbeitselektrode 3 bzw. in den Materialabtragsbereich angeschlossen.

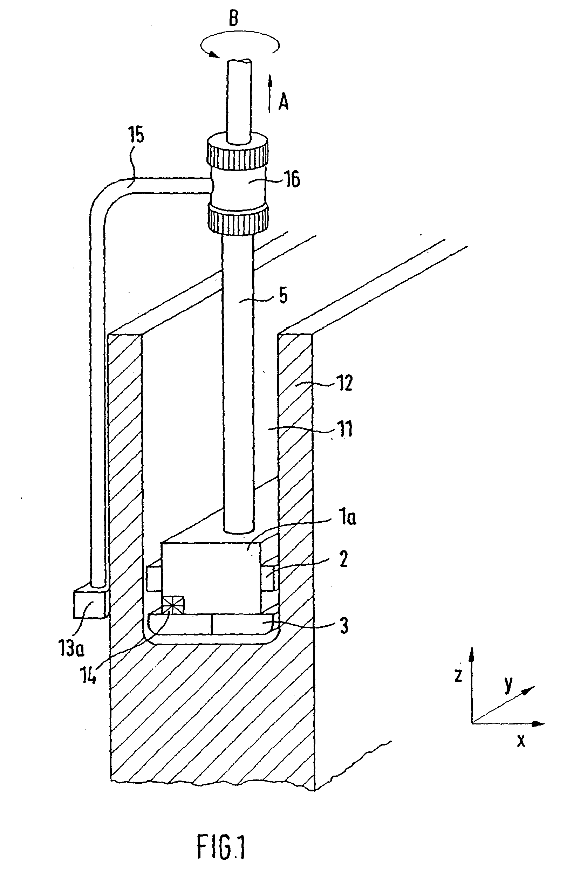

Gemäß den Figuren 1 und 2 befindet sich das zuvor beschriebene Erodierwerkzeug 1 im oberen, noch geraden Teil eines durch elektro-chemische Bearbeitung in dem betreffenden Bauteil, hier einer Fanschaufel 12, erzeugten Hohlraums 11, der im weiteren elektrolytischen Bearbeitungsprozess einen der Form der Fanschaufel 12 folgenden gekrümmten und verdrehten Verlauf aufweisen soll. Hierzu wird das Erodierwerkzeug 1 während seiner Vorschubbewegung in der Z-Achse über die an den Innenwänden des bereits fertiggestellten Teils des Hohlraums 11 abgestützten Führungsstempel 2 in der X-Achse oder der Y-Achse bewegt und gegebenenfalls gleichzeitig gedreht, wobei das verbiegbare Führungsgestänge 5, das Hüllrohr 6 und die Schlauchleitung 7 dieser Bewegung folgen können. Die Steuerung des hydraulischen oder mechanischen Antriebes der Führungsstempel 2 zur Einstellung der jeweiligen Lage des Erodierwerkzeuges 1 erfolgt während des Erodierprozesses über die Messung der bei der Erzeugung des Hohlraumes 11 verbleibenden Wandstärke s mit magnetischen oder anderen geeigneten Verfahren, wie zum Beispiel mittels Ultraschall-Messverfahren. Gemäß dem vorliegenden Ausführungsbeispiel, bei dem die Wandstärkenmessung zur Steuerung der Bewegung der Führungsstempel 2 auf der Grundlage eines Magnetmessverfahrens erfolgt, ist an dem Führungskörper 1a ein Magnet 14, hier ein Neodym-Magnet, angebracht, dem an der Außenseite der Fanschaufel 12 zwei in vorgegebenem Abstand angeordnete, der Vorschubbewegung des Führungskörpers 1a/des Magneten 14 folgende Magnetometersonden 13a und 13b gegenüberstehen. Die beiden Magnetometersonden 13a, 13b sind mit dem Führungsgestänge 5 verbunden, und zwar über ein Gestänge 15, das mittels eines Drehgelenkes 16 an dem Führungsgestänge 5 angebracht ist. Der außen liegende Teil der Wandstärkenmesseinrichtung, hier die Magnetometersonden 13a, 13b, wird längs einer dem gewünschten Verlauf des Hohlraums 11 in der Fanschaufel 12 vorgegebenen Spur oder Bahn geführt.

### Bezugszeichenliste

- 1: Erodierwerkzeug
- 1a: Führungskörper
- 2: Führungsstempel
- 2a: hydr. angetr. Führungsstempel
- 2b: mech. angetr. Führungsstempel
- 3: Arbeitselektrode
- 4: Stromzuführungskabel
- 5: Führungsgestänge
- 6: Hüllrohr für 9a,b oder 10
- 7: Schlauchleitung für Elektrolytzufuhr
- 8: Kolben v. 2a
- 9: Druckzylinder
- 9a, 9b: Druckschläuche
- 10: Antriebsgestänge von 2b
- 11: Hohlraum in 12 (Arbeitsspalt)
- 12: Bauteil (Werkstück, Fanschaufel)
- 13a,13b: Magnetometersonden
- 14: Magnet (Neodym-Magnet)
- 15: Gestänge
- 16: Drehgelenk

## Patentansprüche

1. Vorrichtung zum Elysiersenken für die Herstellung langgestreckter Hohlräume in einem als Anode dienenden metallischen Bauteil mit einer in einem Elektrolyten eine Vortriebsbewegung ausführenden, an einem angetriebenen Führungsgestänge gehaltenen Arbeitselektrode, insbesondere zur Herstellung hohler Fanschaufeln für Flugtriebwerke, **dadurch gekennzeichnet, dass** die Arbeitselektrode (3) an einem mit einem biegeweichen, torsionssteifen Führungsgestänge (5) verbundenen Führungskörper (1a) angebracht ist, der an den Seitenwänden radial beweglich angetriebene, an den Innenwänden des Hohlraums (11) abgestützte Führungsstempel (2) zur Bewegung des Führungskörpers in einer mit der Z-Richtung überlagerten X-/Y-Richtung oder Drehrichtung aufweist, deren Antrieb in Abhängigkeit von der im jeweiligen Arbeitsbereich verbleibenden, mit einer parallel zum Führungskörper (1a) mitgeführten Messeinrichtung (13a, 13b; 14) laufend gemessenen Wandstärke (s) des Bauteils (12) steuerbar ist.

2. Vorrichtung nach Anspruch 1, **dadurch gekennzeichnet, dass** der an der Außenseite des Bauteils (12) befindliche Teil (13a, 13b) der Messeinrichtung an einem Gestänge (15) angebracht ist, das über ein Drehgelenk (16) mit dem Führungsgestänge (5) verbunden ist.

3. Vorrichtung nach Anspruch 2, **dadurch gekennzeichnet, dass** die Messeinrichtung (13a, 13b) entlang einer an dem Bauteil (12) vorgesehenen Bahnführung geführt ist.

4. Vorrichtung nach Anspruch 2, **dadurch gekennzeichnet, dass** die Messeinrichtung auf einer Magnetfeldmessung basiert und einen am Führungskörper angebrachten Magneten (14) sowie zwei am Gestänge (15) im Abstand gehaltene Magnetometersonden (13a, 13b) umfasst.

5. Vorrichtung nach Anspruch 1, **dadurch gekennzeichnet, dass** die Messeinrichtung zur Wandstärkenmessung auf dem Ultraschall- oder einem anderen geeigneten Messprinzip basiert.

6. Vorrichtung nach Anspruch 1, **dadurch gekennzeichnet, dass** der Führungskörper (5) eine der Innenkontur des langgestreckten Hohlraums (11) entsprechende, kleinere Querschnittsfläche aufweist.

7. Vorrichtung nach Anspruch 1, **dadurch gekennzeichnet, dass** die aus dem Führungskörper (1a) ausfahrbaren Führungsstempel (2a) hydraulisch angetrieben sind, wobei ein mit dem Führungsstempel (2a) verbundener Kolben (8) in einem Druckzylinder (9) mit an diesen angeschlossenen, über ein Hüllrohr (6) nach außen geführten Druckschläuchen (9a, 9b) geführt ist.

8. Vorrichtung nach Anspruch 1, **dadurch gekennzeichnet, dass** die Führungsstempel als aus dem Führungskörper (1a) ausschwenkbare Drehhebel (2a) ausgebildet sind, die über ein in einem Hüllrohr (6) nach außen geführtes Antriebsgestänge (10) mit einem Antriebsmittel verbunden sind.

9. Vorrichtung nach Anspruch 1, **dadurch gekennzeichnet, dass** die Arbeitselektrode (3) zur Veränderung ihrer Form und Größe und damit zur Änderung der Querschnittsfläche des langgestreckten Hohlraums (11) aus einer Mehrzahl zueinander verschiebbarer Elektrodenplatten besteht.

10. Vorrichtung nach Anspruch 1, **dadurch gekennzeichnet, dass** das biegeweiche, torsionssteife Führungsgestänge (5) an einen Vorschub- und Drehantrieb gekoppelt ist.

## Claims

1. Fixture for electro-chemical machining for the production of long cavities in a metallic component acting as anode, with a working electrode mounted on a power-actuated guide linkage performing a feed movement in an electrolyte, in particular for the manufacture of hollow fan blades for aircraft engines, **characterized in that** the working electrode (3) is mounted on a guide body (1a) connected to a flexurally soft, torsionally stiff guide linkage (5) and is provided with guide elements (2) on the side walls which are radially moveably actuated and rest against the inner walls of the cavity (11) to effect the movement of the guide body in an X-/Y-direction superimposed with the Z-direction or in a rotary direction, with the actuating arrangement of these guide elements being controllable in dependence of the wall thickness (s) of the component (12) remaining in the respective working zone and continuously measured by a measuring device (13a, 13b; 14) tracked parallelly to the guide body (1a).

2. Fixture in accordance with Claim 1, **characterized in that** the part (13a, 13b) of the measuring device situated on the outer side of the component (12) is mounted to a linkage (15) which is connected to a guide linkage (5) via a rotary joint (16).

3. Fixture in accordance with Claim 2, **characterized in that** the measuring device (13a, 13b) is moved along a tracking arrangement provided on the component (12).

4. Fixture in accordance with Claim 2, **characterized in that** the measuring device is based on a magnetic field measurement and includes a magnet (14) arranged on the guide body and two magnetometer probes (13a, 13b) arranged remotely on the linkage (15).

5. Fixture in accordance with Claim 1, **characterized in that** the measuring device for wall thickness measurement is based on the ultrasonic or another, suitable measuring principle.

6. Fixture in accordance with Claim 1, **characterized in that** the guide body (5) has a cross-sectional area which conforms to, but is smaller than, the inner contour of the long cavity (11).

7. Fixture in accordance with Claim 1, **characterized in that** the guide elements (2a) deployable from the guide body (1 a) are hydraulically actuated, with a piston (8) connected to the guide element (2a) being guided in a pressure cylinder (9) to which pressures hoses (9a, 9b) are attached which are routed to the outside via a shroud (6).

8. Fixture in accordance with Claim 1, **characterized in that** the guide elements are designed as rotary levers (2a) deployable from the guide body (1 a) which are connected to an actuating arrangement by way of an actuating linkage (10) routed to the outside in a shroud (6).

9. Fixture in accordance with Claim 1, **characterized in that** the working electrode (3) includes a multitude of electrode plates which are shiftable relative to each other to change the shape and size of the electrode, thus enabling the cross-sectional area of the long cavity (11) to be altered.

10. Fixture in accordance with Claim 1, **characterized in that** the flexurally soft, torsionally stiff guide linkage (5) is coupled to a feed and rotary drive.

## Revendications

1. Dispositif d'usinage électrochimique pour confectionner des cavités allongées dans un composant métallique servant d'anode, avec une électrode de travail effectuant un mouvement d'avancement dans un électrolyte et maintenue par une tige de guidage entraînée, en particulier pour la fabrication d'aubes de soufflante creuses pour moteurs d'avion, **caractérisé en ce que** l'électrode de travail (3) est montée sur un corps de guidage (1a) qui est relié à une tige de guidage (5) souple en flexion et rigide à la torsion, et qui présente des éléments de guidage (2) entraînés de manière mobile dans le sens radial sur les parois latérales et s'appuyant sur les parois intérieures de la cavité (11) pour le mouvement du corps de guidage selon une direction X/Y superposée à la direction Z, ou selon un sens de rotation, dont l'entraînement peut être commandé en fonction de l'épaisseur de paroi (s) du composant (12) restante dans la plage de travail respective et mesurée en continu avec un dispositif de mesure (13a, 13b ; 14) guidé parallèlement au corps de guidage (1a).

2. Dispositif selon la revendication n° 1, **caractérisé en ce que** la partie (13a, 13b) du dispositif de mesure située sur le côté extérieur du composant (12) est fixée à une tige (15) reliée à la tige de guidage (5) par une articulation tournante (16).

3. Dispositif selon la revendication n° 2, **caractérisé en ce que** le dispositif de mesure (13a, 13b) est guidé le long d'une voie de guidage prévue sur le composant (12).

4. Dispositif selon la revendication n° 2, **caractérisé en ce que** le dispositif de mesure se base sur une mesure de champ magnétique et comprend un aimant (14) fixé au corps de guidage, ainsi que deux capteurs magnétométriques (13a, 13b) maintenus à distance sur la tige (15).

5. Dispositif selon la revendication n° 1, **caractérisé en ce que** le dispositif de mesure pour mesurer l'épaisseur de paroi se base sur le principe de mesure ultrasonique ou un autre principe adéquat.

6. Dispositif selon la revendication n°1, **caractérisé en ce que** le corps de guidage (5) présente une section transversale correspondant au contour intérieur de la cavité (11) allongée et inférieure à la section de cette dernière.

7. Dispositif selon la revendication n°1, **caractérisé en ce que** les éléments de guidage (2a) déployables à partir du corps de guidage (1a) sont entraînés hydrauliquement, sachant qu'un piston (8) relié à l'élément de guidage (2a) est guidé dans un vérin hydraulique (9) auquel sont raccordés des tuyaux de refoulement (9a, 9b) et acheminés vers l'extérieur par l'intermédiaire d'une gaine (6).

8. Dispositif selon la revendication n° 1, **caractérisé en ce que** les éléments de guidage sont formés par des leviers tournants (2a) pouvant sortir par pivotement du corps de guidage (1a) et qui sont reliés à un moyen d'entraînement par une tige d'entraînement (10) acheminée vers l'extérieur dans une gaine (6).

9. Dispositif selon la revendication n°1, **caractérisé en ce que** l'électrode de travail (3) est constituée de plusieurs plaques d'électrode mobiles les unes par rapport aux autres afin de changer sa forme et sa taille et donc de modifier la section transversale de la cavité (11) allongée.

10. Dispositif selon la revendication n°1, **caractérisé en ce que** la tige de guidage (5) souple en flexion et rigide à la torsion est couplée à un entraînement d'avance et de rotation.
